(19) Europäisches Patentamt
European Patent Office
Office européen des brevets

(11) **EP 1 792 387 B1**

(12) **FASCICULE DE BREVET EUROPEEN**

(45) Date de publication et mention
de la délivrance du brevet:
**24.06.2015 Bulletin 2015/26**

(21) Numéro de dépôt: **05779876.1**

(22) Date de dépôt: **05.09.2005**

(51) Int Cl.:
***H02M 7/08*** *(2006.01)*    ***H01F 30/02*** *(2006.01)*

(86) Numéro de dépôt international:
**PCT/EP2005/054362**

(87) Numéro de publication internationale:
**WO 2006/032607 (30.03.2006 Gazette 2006/13)**

(54) **CONVERTISSEUR ALTERNATIF-CONTINU POUR L'AERONAUTIQUE**

WECHSELSTROM-GLEICHSTROM-UMSETZER FÜR DIE AERONAUTIK

AC/DC CONVERTER FOR AERONAUTICS

(84) Etats contractants désignés:
**DE ES GB IT SE**

(30) Priorité: **24.09.2004 FR 0410150**

(43) Date de publication de la demande:
**06.06.2007 Bulletin 2007/23**

(73) Titulaire: **THALES
92200 Neuilly sur Seine (FR)**

(72) Inventeur: **BLANCHERY, Françis
F-78400 Chatou (FR)**

(74) Mandataire: **Guérin, Michel
Marks & Clerk France
Conseils en Propriété Industrielle
Immeuble Visium
22, Avenue Aristide Briand
94117 Arcueil Cedex (FR)**

(56) Documents cités:
**US-A- 5 619 407    US-B1- 6 198 647**

**Description**

L'invention concerne l'alimentation électrique des avions et notamment des avions commerciaux de grande taille.

Dans les avions de taille importante tels que les avions de transport de dizaines ou de centaines de passagers, l'alimentation électrique devient un élément très important dans la conception générale de l'appareil. En effet les appareils électriques placés à bord et servant soit au fonctionnement de l'appareil soit aux services à bord sont de plus en plus nombreux et consomment de plus en plus d'énergie.

Cette énergie est produite par des alternateurs couplés aux moteurs de l'avion et les alternateurs fournissent usuellement une tension triphasée de 115 volts efficaces entre neutre et phase, à fréquence de 400 Hz. Cette tension est transportée à l'intérieur de l'avion par des câbles électriques dont la section est proportionnelle au carré de la valeur du courant qui doit pouvoir être transporté par ces câbles. Typiquement, on peut avoir besoin de plusieurs centaines de mètres de câbles capables de transporter plusieurs kilowatts. Il en résulte un poids très important de cuivre ou d'aluminium à installer dans l'avion.

Il est apparu par conséquent qu'il pouvait être préférable de concevoir maintenant des avions dans lesquels l'énergie transportée circule sous 230 volts au moins, afin de diviser sensiblement par 4 la section des câbles transportant l'énergie. Les alternateurs de tels avions seront donc conçus pour fournir directement une alimentation triphasée à 400 Hz et 230 volts efficaces entre neutre et phase. De plus, ces avions modernes vont maintenant être équipés d'un réseau de distribution d'énergie électrique continue, typiquement à 540 volts (plus ou moins 270 volts par rapport à la structure métallique de l'avion). L'intérêt de la distribution d'énergie continue est de permettre, par l'intermédiaire d'onduleurs à fréquence variable, de réaliser une commande individuelle de vitesse de certains moteurs synchrones ou asynchrones présents dans l'appareil (compresseurs, climatiseurs, pompes à carburant etc.).

Par ailleurs, les avions doivent consommer de l'énergie électrique lorsqu'ils sont immobilisés au sol sur un aéroport, moteurs arrêtés. Cette énergie est nécessaire pour assurer des fonctions d'éclairage, climatisation, maintenance, démarrage, etc.

Ils sont donc connectés, par l'intermédiaire d'un connecteur triphasé accessible à l'extérieur de l'avion, à des groupes générateurs d'énergie électrique placés au sol, administrés par les aéroports. Les groupes générateurs fournissent tous de l'énergie triphasée sous 115 volts efficaces puisque la plupart des avions sont équipés pour fonctionner avec 115 volts efficaces. On peut imaginer que dans le futur les aéroports s'équipent avec des groupes fournissant du 115 volts et du 230 volts, ou que des groupes spéciaux fournissant 230 volts soient prévus pour le cas où un avion équipé en 230 volts se poserait. Mais cela implique un coût que les aéroports ne souhaitent pas assumer et cette solution n'est envisageable qu'à très long terme lorsque le nombre d'avions équipés en 230 volts sera très significatif.

Dans l'immédiat, la solution est de prévoir sur l'avion un transformateur triphasé placé entre un connecteur d'alimentation extérieure (destiné à être relié au générateur au sol) et le réseau de fourniture d'énergie à 230 volts de l'avion. Ce transformateur ajoute un poids et un encombrement supplémentaire uniquement pour cette raison de logistique des aéroports. US 5,619,407 montre un convertisseur suivant le préambule de la revendication 1.

La présente invention propose une solution pour limiter les inconvénients dus à cette situation. Cette solution est applicable lorsque l'avion possède un réseau de distribution d'énergie électrique continue recevant l'énergie d'un alternateur triphasé et un convertisseur alternatif-continu (en pratique un autotransformateur suivi d'un pont redresseur) pour transformer l'énergie alternative en énergie continue. La présente invention est definie dans la revendication 1.

Selon l'invention, le convertisseur alternatif-continu, destiné à être connecté par trois entrées principales à une alimentation en tension triphasée d'amplitude Va donnée, comporte un autotransformateur à trois entrées principales et plus de trois sorties et un pont redresseur à plus de trois phases relié aux sorties de l'autotransformateur, l'autotransformateur comportant un noyau magnétique à trois branches et sur chaque branche un bobinage principal et des bobinages auxiliaires, les bobinages auxiliaires d'une branche étant connectés électriquement d'un côté à des prises des bobinages principaux de cette branche ou d'une autre branche et de l'autre à une sortie respective de l'autotransformateur, l'ensemble des connections présentant une symétrie de permutation circulaire permettant un fonctionnement en triphasé équilibré. Le convertisseur est caractérisé par le fait qu'il comporte trois prises d'alimentation auxiliaires, chacune sur un bobinage respectif selon une symétrie de permutation triphasée, à un endroit où l'amplitude de la tension est Va/g lorsque la tension d'alimentation présente sur les entrées est Va, ces trois prises d'alimentation auxiliaires étant reliées à un connecteur triphasé pour constituer une entrée triphasée auxiliaire permettant de recevoir occasionnellement de l'énergie électrique alternative à une tension Va/g d'amplitude différente de l'amplitude Va destinée à être appliquée aux entrées principales.

En pratique, les prises auxiliaires sont situées à un endroit où l'amplitude est Va/2. Ainsi, en fonctionnement normal de l'avion, moteurs en route, les trois entrées principales reçoivent l'énergie alternative à 230 volts 400Hz fournie par les alternateurs des moteurs. En fonctionnement au sol, moteurs arrêtés, une énergie peut être amenée par les groupes au sol vers les entrées auxiliaires, et, si cette énergie est à 115 Volts, l'autotransformateur continuera à fonctionner exactement comme s'il recevait une énergie à 230 volts sur ses entrées principales. Ceci résulte du choix de la position des prises intermédiaires et du principe de réversibilité des autotransformateurs.

L'amplitude Va est par exemple l'amplitude de la tension simple présente entre une entrée du système triphasé et un neutre physique ou virtuel du montage, et dans ce cas bien entendu l'amplitude Va/g est aussi une tension simple. Mais le raisonnement est le même si on considère les amplitudes entre phases des entrées principales : les prises auxiliaires sont choisies aux endroits où l'amplitude entre phases du système triphasé est divisée par g. Le nombre g sera en général supérieur à 1, l'intérêt principal du système existant lorsque g est égal à 2 ou voisin de 2.

Le principe de l'invention peut être adapté à toutes sortes de constructions d'autotransformateurs, à 12 phases ou 18 phases ou plus. Pour certaines constructions d'autotransformateurs g ne peut pas avoir une valeur trop grande. On expliquera plus loin le principe de détermination très simple des positions des prises auxiliaires en fonction de la construction de l'autotransformateur.

Dans un exemple de réalisation préférentiel, les bobinages principaux sont connectés électriquement en montage en triangle entre les trois entrées principales, les bobinages auxiliaires d'une branche magnétique sont connectés chacun à une prise d'un bobinage principal d'une autre branche, et les prises d'alimentation auxiliaires sont placées chacune sur un bobinage principal. Pour permettre une alimentation auxiliaire occasionnelle à une tension Va/2, les prises auxiliaires sont alors des prises médianes placées au milieu des bobinages principaux.

Dans d'autres réalisations, les bobinages principaux ne sont pas nécessairement connectés directement aux entrées principales ; un bobinage auxiliaire peut par exemple être connecté entre une entrée principale et une extrémité ou une prise intermédiaire d'un bobinage principal. Dans ce cas, la prise qui permet par exemple une alimentation à Va/2 n'est pas située au milieu du bobinage principal. On expliquera plus loin comment on définit très simplement la position des prises auxiliaires par une construction vectorielle.

D'autres caractéristiques et avantages de l'invention apparaîtront à la lecture de la description détaillée qui suit et qui est faite en référence aux dessins annexés dans lesquels :

- la figure 1 représente la construction schématique d'un transformateur triphasé ;
- la figure 2 représente une composition vectorielle permettant de définir les caractéristiques d'un autotransformateur abaisseur de tension, dans un mode de réalisation préféré de l'invention ;
- la figure 3 représente les bobinages prévus sur une branche magnétique de l'autotransformateur ;
- la figure 4 représente le montage de l'autotransformateur correspondant à la composition vectorielle de la figure 2 ;

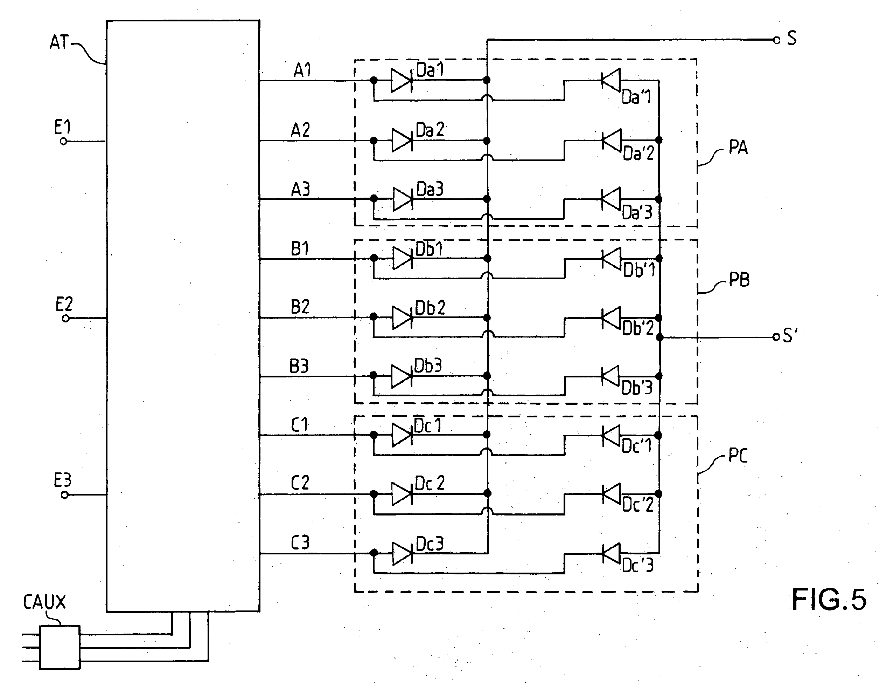

- la figure 5 représente le convertisseur alternatif-continu utilisant l'autotansformateur de la figure 4.

On rappelle d'abord quelques principes généraux sur les convertisseurs alternatif-continu formés à l'aide d'un autotransformateur triphasé et d'un pont de redresseurs.

L'autotransformateur a trois entrées pour recevoir une tension triphasée et un plus grand nombre de sorties déphasées pour fournir une tension alternative à plus grand nombre de phases permettant un redressement avec une plus faible oscillation résiduelle et avec une plus faible réinjection de courants harmoniques. Ainsi, typiquement, on peut transformer le système triphasé, dont les trois phases sont espacées de 120°, en un système à neuf phases espacées de 40° qui peut être considéré comme un système de trois réseaux triphasés décalés de 40° l'un par rapport à l'autre. A la sortie de l'autotransformateur, trois ponts de six diodes sont utilisés, chaque pont étant alimenté par l'un de ces réseaux. Ces convertisseurs AC/DC à dix-huit diodes sont appelés aussi convertisseurs à 18 impulsions.

Dans l'autotransformateur, on trouve essentiellement trois bobinages principaux enroulés sur trois branches magnétiques différentes d'un noyau magnétique à trois branches, et on trouve plusieurs bobinages auxiliaires enroulés sur ces trois branches et connectés à des prises intermédiaires prévues sur les bobinages de l'une ou l'autre des autres branches (ou parfois même de la même branche).

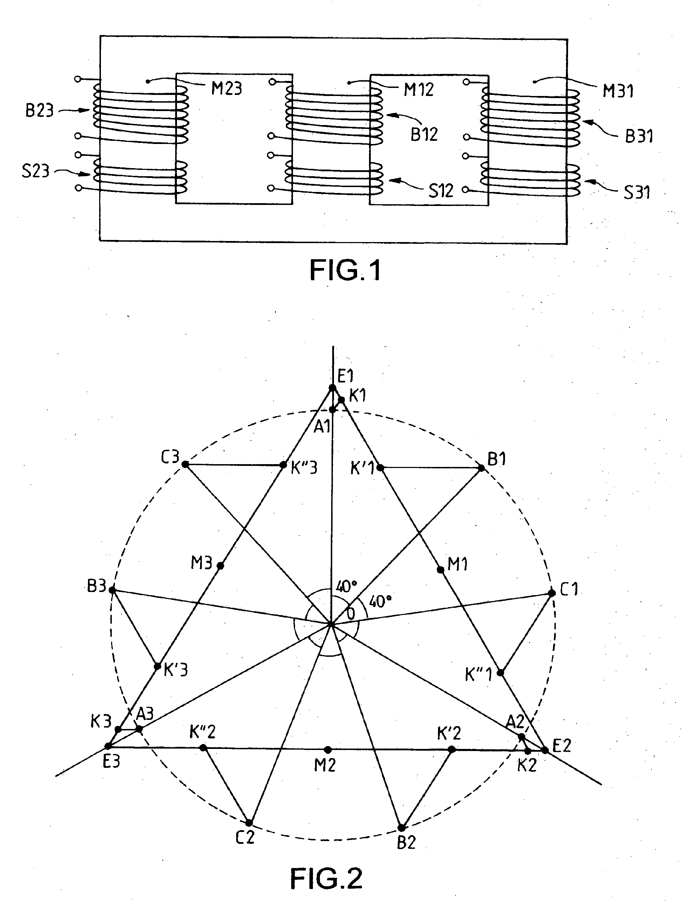

La figure 1 rappelle pour mémoire ce principe d'un transformateur triphasé avec trois branches magnétiques M12, M23 et M31, trois bobinages principaux correspondants B12, B23, et B31 et un exemple de bobinage auxiliaire S12, S23, S31 sur chaque branche. Les bobinages sont représentés sans connection mutuelle, l'objet de la figure 1 n'étant que de rappeler le principe d'un circuit magnétique triphasé. Les figures suivantes montreront les connexions entre les différents bobinages principaux et auxiliaires de l'autotransformateur.

Pour plus de commodité de représentation, les bobinages auxiliaires sont représentés à côté des bobinages principaux, bien qu'en réalité les différents bobinages d'une même branche magnétique soient disposés au même endroit (l'un autour de l'autre, voire les couches de l'un intercalées entre les couches de l'autre) pour être traversés exactement par le même flux magnétique.

Aux bornes d'un bobinage auxiliaire d'une branche magnétique apparaît une tension en phase avec la tension aux bornes du bobinage principal de la même branche. La tension engendrée dans le bobinage auxiliaire dépend

- de la valeur de tension aux bornes du bobinage principal associé,
- du rapport entre les nombres de spires du bobinage principal et du bobinage auxiliaire,
- et du sens de rotation du courant dans l'enroulement du bobinage auxiliaire par rapport au sens du courant dans le bobinage principal.

Le fonctionnement d'un autotransformateur est classiquement représenté par une composition vectorielle des tensions aux bornes des différents bobinages. La phase et l'amplitude de la tension (tension simple présente en un point du circuit ou tension différentielle présente entre deux points du circuit) peuvent être représentées par un vecteur dont la longueur représente l'amplitude de la tension alternative (simple ou différentielle) et dont l'orientation représente la phase de 0° à 360° de cette tension alternative.

Dans la suite on décrira l'invention à partir d'un exemple de réalisation où l'autotransformateur convertit une tension triphasée d'amplitude donnée en une tension à neuf phases espacées de 40°, d'amplitude légèrement plus faible que celle de la tension triphasée.

Pour la constitution d'un tel autotransformateur, on détermine des compositions de vecteurs qui, à partir des trois phases de départ, permettent de fabriquer les neuf phases recherchées.

Dans cet exemple, les bobinages principaux B12, B23, B31 sont connectés en montage en triangle directement entre les entrées principales E1, E2, E3 recevant la tension alternative de 230 volts efficaces triphasée à convertir. La figure 2 représente une composition vectorielle correspondant à un tel autotransformateur.

Les vecteurs utilisés dans la composition sont obtenus d'une part à partir de points représentant les bornes de bobinages principaux ou auxiliaires et d'autre part à partir de points représentant des prises intermédiaires de ces bobinages. La tension obtenue entre deux prises intermédiaires d'un bobinage principal est en phase avec la tension du bobinage principal (les vecteurs sont donc colinéaires) ; son amplitude est une fraction de la tension aux bornes du bobinage principal, cette fraction étant fonction du rapport entre le nombre de spires d'enroulement situées entre les prises intermédiaires et le nombre de spires total du bobinage principal ; la longueur relative du vecteur représentant la tension entre deux prises intermédiaires d'un bobinage est déterminée par ce rapport de nombre de spires.

Selon le même principe, la tension obtenue aux bornes d'un bobinage auxiliaire associé au bobinage principal (c'est-à-dire parcouru par le même flux magnétique donc enroulé au même endroit sur une même branche magnétique) est en phase avec la tension aux bornes du bobinage principal (les vecteurs sont donc parallèles) et son amplitude est également déterminée par le rapport entre le nombre de spires du bobinage auxiliaire et le nombre de spires du bobinage principal ; la longueur du vecteur représentant la tension dans le bobinage auxiliaire est donc, relativement à la longueur du vecteur représentant la tension dans le bobinage principal, dans le rapport des nombres de spires.

Par commodité, dans ce qui suit, les mêmes lettres (par exemple E1 et E2) désigneront à la fois les bornes d'un bobinage (sur les figures représentant des bobinages), et les extrémités du vecteur représentant la tension aux bornes de ce bobinage (sur les figures représentant les compositions vectorielles).

On définit arbitrairement, pour la composition vectorielle, un point neutre d'origine O et les tensions simples d'entrée et de sortie de l'autotransformateur seront référencées par rapport à ce point. Ainsi, le vecteur OE1 représente l'amplitude et la phase de la tension simple présente sur la borne E1 de l'alimentation triphasée. Le point neutre O est un point virtuel (entrée et sortie par montage en triangle) du circuit ; si on suppose que l'alimentation triphasée appliquée en E1, E2, E3, est bien équilibrée, le point neutre représente le point de référence où la somme vectorielle des tensions OE1, OE2, OE3 est nulle. Dans la représentation vectorielle, le point O est le centre d'un triangle équilatéral dont les sommets sont les points E1, E2, E3. Les vecteurs OE2 et OE3, de même amplitude que le vecteur OE1 sont respectivement orientés à +120° et -120° du vecteur de référence OE1. Si l'alimentation appliquée aux bornes E1, E2, E3 est une alimentation triphasée en triangle (cas préféré), les vecteurs E1 E2, E2E3, E3E1 représentent les amplitudes et phases des tensions entre lignes de l'alimentation, appliquées aux bornes des bobinages primaires. Ils sont à 120° les uns des autres. Pour simplifier la notation vectorielle, dans tout ce qui suit la première lettre d'un vecteur est considérée comme l'origine du vecteur et la deuxième lettre est l'aboutissement du vecteur ; ainsi, OE1 représente le vecteur partant de O et allant jusqu'à E1 et non l'inverse.

Sur la figure 2, on a choisi comme référence de phase la phase de la tension simple OE1 (direction verticale). La direction du vecteur E1 E2 est à +150° ; celle du vecteur E2E3 est à +270°; et celle du vecteur E3E1 est à +30°.

La composition vectorielle de la figure 2 permet de fabriquer neuf tensions de phases à 40° les unes des autres et de même amplitude, plus faible que celle de la tension triphasée d'alimentation.

Trois des neuf phases sont alignées avec les phases OE1, OE2, OE3 de l'alimentation triphasée de l'auto-transformateur.

A partir d'une hypothèse de départ de coefficient k représentant le rapport entre la valeur Va' de la tension des neuf phases et la valeur Va de la tension d'entrée (simple OE1, OE2, OE3), on procède comme suit : on trace à partir du point neutre O trois systèmes de trois vecteurs de même amplitude Va' égale à l'amplitude de OE1 multipliée par le rapport de réduction k :

$$Va' = Va*k$$

Il est à noter que k est inférieur à 1 et peut descendre jusqu'à environ 0,56.

Les vecteurs du premier système définissent trois points A1, A2 et A3 sur le cercle de centre O et de rayon Va'=k*Va. Les vecteurs OA1, OA2, OA3 sont alignés avec les vecteurs OE1, OE2, OE3 respectivement et sont donc espacés de 120° les uns par rapport aux autres. Les vecteurs du deuxième système définissent trois points B1, B2, B3 sur le même cercle de centre O et de rayon Va'. Les vecteurs OB1, OB2, OB3 se déduisent des vecteurs OA1, OA2, OA3 par rotation de +40°. Enfin, les vecteurs du troisième système, OC1, OC2, OC3, se déduisent des vecteurs OB1, OB2, OB3 par une nouvelle rotation de +40° (on aurait pu dire aussi que les vecteurs du troisième système se déduisent des vecteurs OA1, OA2, OA3 par une rotation de -40°, ce qui revient strictement au même en intervertissant les appellations C1 et C3).

On aboutit donc à neuf vecteurs espacés de 40° et ayant pour amplitude Va'=k*Va

Sur le vecteur E1E2, on définit trois points intermédiaires K1, K'1, K"1 qui constitueront physiquement des prises intermédiaires du bobinage principal B12.

Le point K1 est le point d'intersection entre le vecteur E1 E2 et une droite ayant son origine au point A1 et parallèle au vecteur E3E1.

Le point K'1 est le point d'intersection du vecteur E1 E2 avec une droite partant du point B1 et tracée parallèlement au vecteur E2E3.

Enfin, le point K"1 est le point d'intersection du vecteur E1 E2 avec une droite partant du point C1 et tracée parallèlement au vecteur E3E1.

De la même manière, par permutation circulaire, on détermine les prises intermédiaires K2, K'2, K"2, K3, K'3, K"3.

Sur cette construction, ou en faisant un calcul trigonométrique dont la recopie serait fastidieuse et qui est trivial puisque tous les angles sont connus ainsi que les longueurs respectives de OA1 et OE1, on mesure les longueurs des vecteurs E1K1, A1K1, E1K'1, B1K'1, K"1C1, et E1K"1. Les longueurs des autres vecteurs, obtenus par permutation circulaire, sont évidemment identiques.

Ces longueurs, rapportées à la longueur du vecteur E1 E2, définiront des nombres de spires de bobinages rapportés au nombre N total de spires du bobinage primaire.

Ainsi, la prise intermédiaire K1 dans le bobinage principal B12 est à une position telle que le rapport n1/N entre le nombre n1 des spires se trouvant entre E1 et K1 et le nombre total N de spires du bobinage primaire B12 est:

$$n1/N = E1K1/E1E2$$

De même, les prises intermédiaires K'1 et K"1 sont placées à des positions telles que le rapport entre le nombre n'1 de spires situées entre E1 et K'1 et le nombre total N de spires est :

$$n'1/N = E1K'1/E1E2$$

et le rapport entre le nombre de spires n"1 situées entre E1 et K"1 et le nombre de spires total N est :

$$n"1/N = E1K"1/E1E2$$

Les points A1, B1 et C1 sont déterminés à partir des vecteurs K1A1, K'1B1, et K"1C1 dont les orientations ne sont pas celles du vecteur E1 E2. Les tensions correspondant à ces vecteurs seront donc définies à partir de bobinages auxiliaires ; les bobinages auxiliaires sont placés sur les deux autres branches magnétiques M23 et M31 du circuit magnétique. Ces bobinages auront une première extrémité reliée à une prise intermédiaire, K1, K'1 ou K"1 respectivement, du bobinage principal B12 et une deuxième extrémité qui constituera une sortie A1, B1 ou C1 respectivement de l'autotransformateur.

Ainsi, un bobinage auxiliaire placé sur la troisième branche M31 du circuit magnétique (celle qui porte le troisième bobinage primaire B31 connecté entre E3 et E1) servira à établir une tension représentée par le vecteur K1A1 puisque ce vecteur est parallèle au vecteur E3E1. Ce bobinage aura une extrémité connectée à la prise K1 et son autre extrémité constituera une borne de sortie A1 de l'autotransformateur. De même, un bobinage auxiliaire placé sur la deuxième branche du circuit magnétique (celle qui porte le deuxième bobinage principal B23 connecté entre E2 et E3) servira à établir une tension représentée par le vecteur K'1B1 puisque le vecteur K'1B1 est parallèle à E2E3. Ce bobinage aura une extrémité connectée à la prise K'1 et son autre extrémité constituera une deuxième sortie B1 de l'autotransformateur, décalée en phase de 40° par rapport à la sortie A1. De même encore, un bobinage auxiliaire placé sur la troisième branche magnétique M31 (celle qui porte le bobinage principal B31 connecté entre E3 et E1) servira à établir la tension K"1C1. Ce bobinage aura une extrémité connectée à la prise intermédiaire K"1 et une autre extrémité définissant une troisième sortie C1 déphasée de 40° par rapport à la deuxième.

Les autres sorties A2, B2, C2 puis les sorties A3, B3, C3 sont réalisées selon le même principe, par permutation circulaire.

Enfin, une prise auxiliaire d'alimentation M1 est prévue sur le bobinage B12, au milieu de celui-ci, et de la même manière une prise auxiliaire M2 et M3 au même emplacement que la prise M1 mais sur le bobinage B23 et le bobinage B31 respectivement. Les trois prises M1, M2, M3 forment, sur la composition vectorielle de la figure 2, un triangle équilatéral dont les côtés ont une longueur moitié de la longueur des vecteurs E1 E2, E2E3 et E3E1.

Les tensions présentes sur ces prises, lorsque les prises E1, E2, et E3 sont alimentées par une tension triphasée d'amplitude Va, forment un système triphasé d'amplitude Va/2, déphasé de 60° par rapport au système de tensions d'alimentation.

Réciproquement, si on applique aux prises M1, M2, M3 une tension triphasée d'amplitude Va/2, on retrouve sur E1, E2, E3 une tension triphasée d'amplitude Va, déphasée de -60°, et tout se passe dans l'autotransformateur comme si les bornes E1, E2, et E3 recevaient une tension d'alimentation triphasée d'amplitude Va, déphasée de +60° par rapport aux tensions sur les prises M1, M2, M3.

Par conséquent, selon l'invention, on connecte les prises auxiliaires M1, M2, M3 à un connecteur triphasé. Ce connecteur peut être utilisé pour alimenter le convertisseur alternatif-continu lorsque ce dernier ne reçoit pas de tension d'alimentation sur les bornes E1, E2 et E3 , et notamment lorsque l'avion est sur un aéroport avec ses moteurs arrêtés.

En utilisant ce type de configuration d'autotransformateur et en alimentant les prises M1, M2, M3 avec la tension de 115 volts disponible au sol dans les aéroports, tout se passe comme si on alimentait le convertisseur avec 230 volts sur les entrées E1, E2, E3 alors que ces entrées ne sont pas alimentées ; il n'est plus nécessaire de prévoir des groupes d'alimentation spécifiques de 230 volts au sol, ni un transformateur triphasé spécifique 115v/230v dans l'avion.

Si les prises auxiliaires M1, M2, M3 ne sont pas au milieu des bobinages principaux mais décalées à droite ou à gauche par rapport à ce milieu, les tensions présentes sur ces prises sont dans un rapport g inférieur à 2 par rapport à la tension d'alimentation appliquée à E1, E2, E3. On pourrait donc utiliser le système pour alimenter l'avion par une tension extérieure d'amplitude Va/g avec g inférieur à 2. Il est à noter que dans ce schéma on ne trouve pas sur le bobinage principal de position de prise qui permettrait d'obtenir une tension triphasée inférieure à Va/2, c'est-à-dire que g peut être au plus égal à 2.

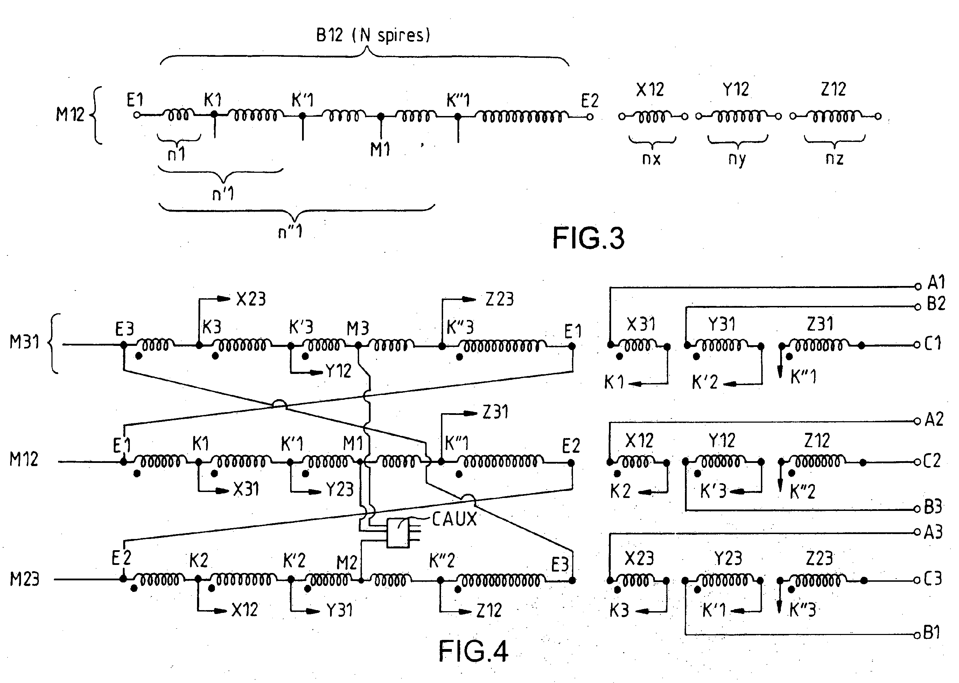

La figure 3 représente les bobinages situés sur la première branche M12 du circuit magnétique : le bobinage principal B12 situé entre les bornes d'entrée E1 et E2, avec ses prises intermédiaires K1, K'1 et K"1 et la prise auxiliaire d'alimentation M1 ; et trois bobinages auxiliaires X12, Y12 et Z12, qui sont situés sur la même branche magnétique M12 que le bobinage principal B12 et parcourus par le même flux magnétique, mais qui ne sont pas connectés directement au bobinage principal B12. Ces bobinages auxiliaires X12, Y12, Z12 produisent les tensions représentées par les vecteurs K2A2, K'3B3, et K"2C2 qui doivent toutes être en phase avec la tension du bobinage principal B12. Ces bobinages sont donc connectés chacun entre une prise intermédiaire K2, K'3 ou K"2 des bobinages principaux B23 et B31 et une sortie respective A2, B3 ou C2 de l'autotransformateur.

Les nombres de spires nx, ny et nz de ces trois bobinages X12, Y12 et Z12 sont calculés en rapport avec le nombre N de spires du bobinage principal en fonction de la longueur de ces trois vecteurs :

$$nx/N = K2A2/E1E2$$

$$ny/N = K'3B3/E1E2$$

$$nz/N = K"2C2/E1E2$$

La deuxième et la troisième branches magnétiques M23 et M31 de l'autotransformateur sont constituées de la même manière.

La figure 4 représente les trois branches magnétiques avec leurs ensembles de bobinages principaux et secondaires respectifs, et cette fois avec les connections qui établissent complètement les amplitudes et phases de tensions désirées permettant que les sorties A1, B1, C1, A2, B2, C2, A3 B3, C3 représentent un système à neuf phases ayant l'amplitude Va' désirée et pouvant alimenter directement un système de trois ponts redresseurs de six diodes chacun. Sur la figure 4, pour tenir compte de la question du sens relatif d'enroulement des bobinages, on a considéré que tous les enroulements vont dans le même sens de rotation lorsqu'on se déplace de la gauche vers la droite et c'est pour cela que par exemple la prise intermédiaire K1 est reliée à la borne de droite du bobinage X31, la sortie A1 étant la borne de gauche, car le vecteur K1A1 doit être orienté en sens inverse du vecteur E3E1.

Les prises auxiliaires d'alimentation médianes M1, M2, M3 des bobinages principaux sont reliées à un connecteur auxiliaire triphasé CAUX servant à l'alimentation en 115 volts à partir d'un groupe triphasé au sol.

Le schéma de la figure 4 et le schéma vectoriel de la figure 2 sont donnés seulement à titre d'exemple d'autotransformateur produisant neuf phases à partir de trois phases. D'autres solutions sont possibles et permettent de faire des autotransformateurs abaisseurs de tension (c'est le cas de la figure 2) ou élévateurs de tension.

L'autotransformateur ainsi réalisé est associé à un pont redresseur à 18 diodes pour former un convertisseur alternatif-continu.

Les sorties directes (A1, A2, A3) de l'autotransformateur sont connectées à un premier pont PA de six diodes Da1, Da2, Da3, Da'1, Da'2, Da'3. Les sorties déphasées de +40° sont connectées à un deuxième pont PB de six diodes Db1, Db2, Db3, Db'1, Db'2, Db'3. Et les sorties déphasées de -40° sont connectées à un troisième pont PC de six diodes Dc1, Dc2, Dc3, Dc'1, Dc'2, Dc'3.

Les trois ponts redresseurs ont des sorties communes S et S' qui constituent les sorties du convertisseur.

La diode Da1 est connectée en direct entre la sortie A1 et une borne positive S constituant l'une des deux bornes de sortie continue du convertisseur. La diode Da'1 est connectée en inverse entre la sortie A1 et une borne négative S' constituant l'autre borne de sortie continue du convertisseur.

La connection est la même pour toutes les autres diodes : la diode Da2 et la diode Da'2 sont connectées en direct et en inverse respectivement entre A1 d'une part et S et S' respectivement d'autre part. La diode Db1 et la diode Bb'1 sont connectées en direct et en inverse respectivement entre B1 d'une part et S et S' d'autre part. Et ainsi de suite, une diode en direct est connectée entre une borne de sortie de l'autotransformateur et la borne S et une diode en inverse est connectée en inverse entre cette borne de sortie et la borne S'.

On a ainsi décrit un exemple concret de réalisation de l'invention. De nombreuses variantes peuvent être envisagées, dépendant principalement du type de composition vectorielle qu'on aura utilisé pour construire l'autotransformateur. A partir de cette composition vectorielle on détermine très facilement les prises d'alimentation auxiliaires qu'il faut prévoir dans l'autotransformateur : soit g le coefficient entre la tension normale Va que doit recevoir le convertisseur sur ses entrées principales (par exemple 230 volts) et la tension occasionnelle Va/g que doivent recevoir les entrées auxiliaires ; sur la composition vectorielle de centre O (noeud virtuel ou réel de l'alimentation triphasée en E1, E2, E3), composition qui dépend de la structure de l'autotransformateur, on trace un cercle de centre O et de rayon Va/g et on note les intersections avec des vecteurs représentant des bobinages. Parmi ces intersections on en choisit trois qui forment un triangle équilatéral de centre O et ces trois points définissent des prises auxiliaires qu'on placera sur ces bobinages en réalisant l'autotransformateur. Les trois prises auxiliaires seront connectées à un autotransformateur. Si le cercle ne coupe pas de vecteur représentant un bobinage, c'est que la valeur de g est hors de la gamme possible pour ce type de structure.

Cette détermination de prises auxiliaires s'applique à des modifications simples du schéma des figures 2 et 4 ou à des schémas largement différents. Parmi les modifications simples, on peut envisager par exemple que la sortie A1 soit obtenue à partir d'un bobinage auxiliaire de la branche M23 et non M31 (et bien sûr la même chose pour les autres sorties A2 et A3 par permutation circulaire). Parmi des modifications plus complexes, on peut envisager que les extrémités des trois bobinages principaux montés en triangle ne soient pas directement connectées aux entrées principales E1, E2 et E3 : un bobinage auxiliaire peut être connecté entre une entrée principale et une extrémité ou une prise intermédiaire d'un bobinage principal. Ce bobinage auxiliaire peut être situé sur la même branche magnétique que le bobinage principal à l'extrémité duquel il est connecté ; il peut aussi être prévu (cas d'un auto-transformateur élévateur de tension) que les trois bobinages principaux soient montés en triangle mais que les entrées principales soient connectées à des bobinages auxiliaires connectés à une prise intermédiaire d'un bobinage principal qui n'est pas situé sur la même branche magnétique que le bobinage auxiliaire. La variété des configurations est très grande et selon la configuration choisie, une gamme de valeurs de g est possible. Il est même possible que les prises auxiliaires soient placées sur des bobinages auxiliaires plutôt que sur les bobinages principaux si le cercle de rayon Va/g coupe les vecteurs représentant les bobinages auxiliaires de l'autotransformateur.

**Revendications**

1. Convertisseur alternatif-continu, destiné à être connecté par trois entrées principales à une alimentation en tension triphasée d'amplitude Va donnée, comportant un autotransformateur à trois entrées principales (E1, E2, E3) et plus de trois sorties (A1, A2, A3, B1, etc.) et un pont redresseur à plus de trois phases relié aux sorties de l'autotransformateur, l'autotransformateur comportant un noyau magnétique à trois branches (M12, M23, M31) et sur chaque branche un bobinage principal (B12, B23, B31) et des bobinages auxiliaires (X12, X23, X31, etc.), les bobinages auxiliaires d'une branche étant connectés électriquement d'un côté à des prises des bobinages principaux de cette branche ou d'une autre branche et de l'autre à une sortie respective de l'autotransformateur, l'ensemble des connections présentant une symétrie de permutation circulaire permettant un fonctionnement en triphasé équilibré, ce convertisseur étant **caractérisé par le fait qu'**il comporte trois prises d'alimentation auxiliaires (M1, M2, M3), chacune sur un bobinage respectif selon une symétrie de permutation triphasée, à un endroit où l'amplitude de la tension est Va/g lorsque la tension d'alimentation présente sur les entrées principales est Va, et **par le fait que** ces trois prises d'alimentation auxiliaires (M1, M2, M3) sont reliées à un connecteur triphasé (CAUX) pour constituer une entrée triphasée auxiliaire permettant de recevoir occasionnellement de l'énergie électrique alternative à une tension Va/g d'amplitude différente de l'amplitude Va destinée à être appliquée aux entrées principales.

2. Convertisseur selon la revendication 1, **caractérisé en ce que** les prises d'alimentation auxiliaires sont situées à un endroit où l'amplitude est Va/2.

3. Convertisseur alternatif-continu selon la revendication 1, **caractérisé en ce que** les bobinages principaux (B12, B23, B31) sont connectés électriquement en montage en triangle entre les trois entrées principales (E1, E2, E3), les bobinages auxiliaires d'une branche magnétique sont connectés chacun à une prise d'un bobinage principal d'une autre branche, et les prises d'alimentation auxiliaires (M1, M2, M3) sont placées chacune sur un bobinage principal.

4. Convertisseur selon la revendication 3, **caractérisé en ce que** les prises auxiliaires sont des prises médianes placées au milieu des bobinages principaux.

5. Convertisseur selon l'une des revendications 1 et.2, **caractérisé en ce que** les extrémités des bobinages principaux montés en triangle ne sont pas connectées directement aux entrées principales, un bobinage auxiliaire étant connecté entre une entrée principale et une extrémité ou une prise intermédiaire d'un bobinage principal.

## Patentansprüche

1. Wechselstrom-Gleichstrom-Umsetzer, der dazu bestimmt ist, durch drei Haupteingänge mit einer Dreiphasen-Spannungsversorgung gegebener Amplitude Va verbunden zu sein, der einen Autotransformator mit drei Haupteingängen (E1, E2, E3) und mehr als drei Ausgängen (A1, A2, A3, B1 usw.) und eine Gleichrichterbrücke mit mehr als drei Phasen, die mit den Ausgängen des Autotransformators verbunden ist, aufweist, wobei der Autotransformator einen Magnetkern mit drei Schenkeln (M12, M23, M31) und auf jedem Schenkel eine Hauptwicklung (B12, B23, B31) und Hilfswicklungen (X12, X23, X31 usw.) aufweist, wobei die Hilfswicklungen eines Schenkels auf der einen Seite mit Stufen der Hauptwicklungen dieses Schenkels oder eines anderen Schenkels und auf der anderen Seite mit einem jeweiligen Ausgang des Autotransformators elektrisch verbunden sind, wobei die Gesamtheit der Verbindungen einen kreisförmige Permutationssymmetrie aufweist, die einen ausgeglichenen Dreiphasenbetrieb erlaubt, wobei dieser Umsetzer **dadurch gekennzeichnet ist, dass** er drei Hilfsversorgungsstufen (M1, M2, M3), jede auf einer jeweiligen Wicklung gemäß einer Dreiphasen-Permutationssymmetrie, an einer Stelle aufweist, wo die Amplitude der Spannung Va/g ist, wenn die an den Haupteingängen anliegende Versorgungsspannung Va ist, und dadurch, dass diese drei Hilfsversorgungsstufen (M1, M2, M3) mit einem Dreiphasenverbinder (CAUX) verbunden sind, um einen Dreiphasen-Hilfseingang zu bilden, der erlaubt, gelegentlich alternative elektrische Energie mit einer Spannung Va/g mit einer Amplitude, die sich von der Amplitude Va unterscheidet, die dazu bestimmt ist, an den Haupteingängen anzuliegen, zu empfangen.

2. Umsetzer nach Anspruch 1, **dadurch gekennzeichnet, dass** sich die Hilfsversorgungsstufen an einer Stelle befinden, an der die Amplitude Va/2 ist.

3. Wechselstrom-Gleichstrom-Umsetzer nach Anspruch 1, **dadurch gekennzeichnet, dass** die Hauptwicklungen (B12, B23, B31) zwischen den drei Haupteingängen (E1, E2, E3) in Dreiecksschaltung elektrisch verbunden sind, die Hilfswicklungen eines magnetischen Schenkels jeweils mit einer Stufe einer Hauptwicklung eines anderen Schenkels verbunden sind und die Hilfsversorgungstufen (M1, M2, M3) jeweils auf einer Hauptwicklung platziert sind.

4. Umsetzer nach Anspruch 3, **dadurch gekennzeichnet, dass** die Hilfsstufen mittlere Stufen sind, die in der Mitte der Hauptwicklungen platziert sind.

5. Umsetzer nach einem der Ansprüche 1 und 2, **dadurch gekennzeichnet, dass** die Enden der dreieckig montierten

**EP 1 792 387 B1**

Hauptwicklungen nicht direkt mit den Haupteingängen verbunden sind, wobei eine Hilfswicklung zwischen einem Haupteingang und einem Ende oder einer zwischengestellten Stufe einer Hauptwicklung verbunden ist.

**Claims**

1. An AC-DC converter, designed to be connected by three main inputs to a supply of three-phase voltage of given amplitude Va, comprising an autotransformer with three main inputs (E1, E2, E3) and more than three outputs (A1, A2, A3, B1, etc.) and a rectifier bridge with more than three phases connected to the outputs of the autotransformer, the autotransformer comprising a magnetic core with three branches (M12, M23, M31) and on each branch a main winding (B12, B23, B31) and auxiliary windings (X12, X23, X31, etc.), the auxiliary windings of one branch being electrically connected at one end to terminals of the main windings of this branch or of another branch and at the other to a respective output of the autotransformer, all of the connections exhibiting a circular permutational symmetry allowing a balanced three-phase operation, this converter being **characterized in that** it comprises three auxiliary power supply terminals (M1, M2, M3), each one on a respective winding according to a three-phase permutational symmetry, at a location where the amplitude of the voltage is Va/g when the power supply voltage present on its main inputs is Va, and **in that** these three auxiliary power supply terminals (M1, M2, M3) are connected to a three-phase connector (CAUX) in order to form an auxiliary three-phase input allowing AC electrical power to be occasionally received at a voltage Va/g of different amplitude from the amplitude Va to be applied to the main inputs.

2. The converter as claimed in claim 1, **characterized in that** the auxiliary power supply terminals are situated at a location where the amplitude is Va/2.

3. The AC-DC converter as claimed in claim 1, **characterized in that** the main windings (B12, B23, B31) are electrically connected in a 'delta' configuration between the three main inputs (E1, E2, E3), the auxiliary windings of one magnetic branch are each connected to a terminal of a main winding of another branch, and the auxiliary power supply terminals (M1, M2, M3) are each placed on a main winding.

4. The converter as claimed in claim 3, **characterized in that** the auxiliary terminals are center-tap terminals placed in the middle of the main windings.

5. The converter as claimed in either of claims 1 and 2, **characterized in that** the ends of the main windings in delta configuration are not directly connected to the main inputs, an auxiliary winding being connected between a main input and one end or an intermediate tap of a main winding.

FIG.1

FIG.2

FIG.3

FIG.4

EP 1 792 387 B1

FIG.5

EP 1 792 387 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5619407 A